# EUROPEAN PATENT SPECIFICATION

(11) **EP 2 159 232 B1**
(45) Date of publication and mention of the grant of the patent: **21.11.2012**
(21) Application number: 08748499.4
(22) Date of filing: 15.05.2008
(51) Int. Cl.: C08F 4/64, C08F 10/00

(54) **OLEFIN POLYMERIZATION CATALYST AND PREPARATION METHOD AND USE THEREOF**
OLEFINPOLYMERISATIONSKATALYSATOR, HERSTELLUNGSVERFAHREN DAFÜR UND VERWENDUNG DAVON
CATALYSEUR DE POLYMÉRISATION DES OLÉFINES ET SON PROCÉDÉ DE PRÉPARATION ET SON UTILISATION

(30) Priority: 13.06.2007 CN 200710118854
(43) Date of publication of application: 03.03.2010
(73) Proprietor: Petrochina Company Limited, Beijing 100011 (CN)
(72) Inventor: YI, Jianjun, Beijing 100083 (CN); CUI, Chunming, Tianjin 300384 (CN); LI, Huashu, Tianjin 300071 (CN); YIN, Baozuo, Tianjin 300071 (CN); ZHANG, Jianying, Tianjin 300071 (CN); LANG, Xiaomei, Heilongjiang 163714 (CN); WU, Linmei, Heilongjiang 163714 (CN)
(74) Representative: Hart-Davis, Jason
(86) International application number: PCT/CN2008/000943
(87) International publication number: WO 2008/151504

(56) References cited:
- WO-A1-01/51526
- WO-A1-02/051881
- JP-A- 61 213 209
- JP-A- 61 287 906
- JP-A- 2001 114 816
- JP-A- 2003 119 211

## Description

### Field of the Invention

The present invention relates to olefin polymerization catalyst, preparation method and use thereof in catalyzing olefin polymerization.

### Background of the Invention

The development of high performance polyolefin resin depends on increasing improvement of the olefin polymerization catalyst. USP 4,298,718 and USP 4,495,338 relate to use active magnesium halide as the support of Ziegler-Natta catalyst for the first time, in which the catalyst formed by reaction of the support and titanium tetrachloride shows high activity in propylene polymerization, but has poor steroselective. Subsequently, researchers are striving to improve the performance of the catalyst. GB 2,111,066 discloses a high isotacticity polypropylene can be obtained by adding an electron donor (alkoxyl silicon compound) into a solid titanium catalyst during olefin polymerization, which is formed by contacting a liquid hydrocarbon solution of the magnesium compound with the titanium compound in the liquid state and meanwhile adding another electron donor (eg. phthalate). EP 0361,494 discloses a solid catalyst comprising active magnesium halide, titanium compound having at least one Ti-halide bond supported thereon and organic di- or poly-ether, such as the catalyst obtained by using a 1, 3-diether as electron-donor compound. Under polymerization, such catalyst system can obtain high isotacticity polypropylene without adding external electron donor and having higher activity. CN1,143,651A further improves internal electron donor and/or external electron donor of such catalysts, in which 2-position carbon atoms of 1, 3-diether are used to form a special monocyclic or polycyclic structure with organic groups containing two or three unsaturated bonds, namely, cyclic polyene-1, 3-diether. The activity and steroselective of such catalysts have been improved. CN1,306,544 describes that succinate is used as the internal electron donor to prepare a catalyst, which shows higher activity and steroselective during catalyzing propylene polymerization and produces polypropylene with wider molecular weight distribution (MWD).

As stated in the above representative catalytic polymerization systems, electron donor has various effects on activity and steroselective of the catalyst, and polymer performance, and has a crucial role to the tacticity of polypropylene. Therefore, the development of the polyolefin catalyst is to optimize the existing electron donors and develop novel electron donors. Most of the electron donors currently reported are compounds containing P, N and O, such as carboxylic ether, ether, organophosphorus, amine, silicon compound, etc, which belong to several main catagories of monoesters, diesters (including succinates, alcohol esters) and diethers, etc. It has been found during investigation that sulfonyl-containing compound used as the electron donor has special reactive performances with titanium compound and magnesium compound, and the resulting catalyst shows higher activity and steroselective during catalyzing olefin polymerization.

Document WO 01/51526 discloses catalysts for the polymerisation of olefins that can comprise an internal electron donor which is a sulfone such as bis(phenlsulfonyl)methane, bis(phenylsulfonyl)ethylene or N,N-bis(p-tolylsulfonylmethyl)ethylamine, a carrier such magnesium chloride and possibly silica and a titanium component. However those are not disclosed in combination together.

### Summary of the Invention

The object of the present invention is to provide a solid catalyst for use in olefin polymerization, comprising (1) an active magnesium halide, (2) a titanium compound containing at least one Ti-halide bond supported thereon, and (3) an electron donor selected from the group consisting of one or more sulfonyl-containing compounds having the following formula.

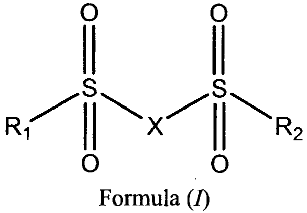

Wherein X is selected from the group consisting of the elements of (di-substituted) Group 14, (mono-substituted) Group 15, or Group 16, in which the substitutes are organic chain-, mono-cycle, multi-cycle or heteroatom-containing cyclic groups, or aliphatic linear groups; R₁ and R₂ can be identical or different, selecting from the group consisting of hydrogen atom, halogen, (substituted) alkyl, cycloalkyl, aryl, aralkyl or alkylaryl, or heteroatom-containing ring. A method for preparing such catalyst comprises reacting magnesium halide (1), or one precursor thereof with a titanium compound (2) and an electron donor compound (3), wherein the electron donor compound (3) is added before or during the reaction of magnesium halide with titanium compound or halogenated compound, and can be added for several times.

In particular, the said catalyst contains sulfonyl-containing compounds of formula (I), wherein X can be selected from the group consisting of C(R₃)(R₄), Si(R₃)(R₄), Sn(R₃)(R₄), Pb(R₃)(R₄), N(R₅), P(R₆), As(R₆), O, S, Se or Te, wherein R₃ and R₄ can be identical or different, R₃, R₄, R₅ and R₆ can be selected from the group consisting of hydrogen atom, halogen, (substituted) alkyl, cycloalkyl, aryl, aralkyl or alkylaryl, alkyl alkenyl, alkenyl alkyl, alkyl alkynyl, heteroatom-containing ring or acyl, respectively; R₃ and R₄ also can constitute cycloalkyl or cycloalkenyl with C.

The sulfonyl-containing compounds preferably are disulfonyl alkane, disulfonyl alkene, disulfonyl cyclic hydrocarbon, disulfonyl silane, disulfonyl cyclosilane, disulfonyl dihydroxy tin, disulfonyl dihydroxy lead, and heteroatom-containing derivatives thereof; disulfonyl imines, disulfonyl phosphinidenes, disulfonyl arsenious, and heteroatom-containing derivatives thereof; (substituted) sulfoacid anhydride, and sulfo- or seleno- derivatives thereof. Examples of the sulfonyl-containing compounds are as follows.

When X, in the formula (I) of the sulfonyl-containing compound, is CR₃R₄, both R₁ and R₂ are CF₃, the sulfonyl-containing compounds of the present invention preferably are:
di(trifluoromethylsulfonyl) methane;
[di(trifluoromethylsulfonyl) methyl] benzene;
1, 1-di(trifluoromethylsulfonyl)-ethane;
[chloro-(trifluoromethylsulfonyl)- methylsulfonyl]-trifluro-methane;
[bromo-(trifluoromethylsulfonyl)- methylsulfonyl]-trifluro-methane;
dichloro-di- trifluoromethylsulfonyl-methane;
dibromo-di-trifluoromethylsulfonyl-methane;
chloro-bromo-di- trifluoromethylsulfonyl-methane;
2-[2, 2-di-(trifluoromethylsulfonyl)-vinyl]-1H-azole;
4-[2, 2-di-(trifluoromethylsulfonyl) vinyl]-morpholine;
2-[2, 2-di-(trifluoromethylsulfonyl)-vinyl]-1H-indole;
trifluro-[methoxyl-(trifluoromethylsulfonyl)- methylsulfonyl]-methane;
1-chloro-1, 1-di(trifluoromethylsulfonyl)-ethane;
1-bromo-1, 1-di(trifluoromethylsulfonyl)-ethane;
4, 4-di-(trifluoromethylsulfonyl)-1-butene;
3, 3-di-(trifluoromethylsulfonyl)-1-propanol;
3, 1 -di-(trifluoromethylsulfonyl)-pentane;
4-bromo-4, 4-di-(trifluoromethylsulfonyl)- 1-butene;
3-bromo-5-chloro-1, 1-di-(trifluoromethylsulfonyl)-pentane;
3 -promo-1, 1-di-(trifluoromethylsulfonyl)-nonane;
[2, 2-di-(trifluoromethylsulfonyl)]-ethyl-benzene;
3-bromo-5, 5-di-(trifluoromethylsulfonyl)- pentanoic acid;
4, 1-di-(trifluoromethylsulfonyl)-propylene ;
5, 2-di-(trifluoromethylsulfonyl)-vinyl amine;
[2, 2-di-(trifluoromethylsulfonyl)-vinyl]-dimethyl-amine;
[3, 3-di-(trifluoromethylsulfonyl)-allyl]-benzene;
1-[2, 2-di-(trifluoromethylsulfonyl)-vinyl]-naphthalene;
4-[2, 2-di-(trifluoromethylsulfonyl)-vinyl]-2-ethoxy-phenol;
1-[2, 2-di-(trifluoromethylsulfonyl)-vinyl]-4-nitro-benzene;
(2, 2-di-trifluoromethylsulfonyl-vinyl-benzene;
7, 7-di-(trifluoromethylsulfonyl)-bicyclic[4, 1, 0]-heptane;
1-[di-(trifluoromethylsulfonyl)-methyl]-4-methyl-benzene;
di-(trifluoromethylsulfonyl)-ketene;
1-[di-(trifluoromethylsulfonyl)-methylene]-pyrimidine;
[di-(trifluoromethylsulfonyl)-methylene]-triphenyl-λ⁵-phosphorus;
1-[di-(trifluoromethylsulfonyl)-methyl]-4-fluoro-benzene;
difluoro-di- trifluoromethylsulfonyl-methane;
6, 2-di- trifluoromethylsulfonyl-cyclopropane carboxylic acid ethyl ester;
trifluoro-(fluoro- trifluoromethylsulfonyl-sulfonylmethyl)-methane;
1-(di- trifluoromethylsulfonyl-methyl)-2, 3, 4, 5, 6- pentafluorophenyl;
{4-[2, 2-di-(trifluoromethylsulfonyl)-vinyl]-phenyl}-diethyl-amine;
{4-[4, 4-di-(trifluoromethylsulfonyl)-butyl-1, 3-diethyl]-phenyl}-dimethyl-amine;
2-[2, 2-di-(trifluoromethylsulfonyl)-ethyl]- malonic acid;
2-[2, 2-di-(trifluoromethylsulfonyl)-ethyl]-3-oxo-ethyl butyrate;
2-[2, 2-di-(trifluoromethylsulfonyl)-ethyl]-2-bromo- diethyl malonate;
1, 1, 3, 3-tetra-(trifluoromethylsulfonyl)-propane;
1, 1, 2, 2-tetra-(trifluoromethylsulfonyl)-ethane;
trifluoro-[methoxyl-(trifluoromethylsulfonyl)-mesyl]-methane;
[di-(trifluoromethylsulfonyl)-mesyl]- trifluoro-methane;
di-(trifluoromethylsulfonyl)- vinyl ketone;
4, 2-di-(trifluoromethylsulfonyl)- ethyl malonate;
[(dimethyl-λ⁴-sulfa-alkenyl)- (trifluoromethylsulfonyl)-mesyl]- trifluoro-methane;
4, 1-di-ethylsulfa-2, 2-di-(trifluoromethylsulfonyl)-ethylene;
1-[di-(trifluoromethylsulfonyl)-methyl]-4-iodo-benzene;
1-[di-(trifluoromethylsulfonyl)-methyl]-4-fluoro-benzene;
N-[di-(trifluoromethylsulfonyl)-methylene]-N'-(4-nitro-benzene)-hydrazine;
5, 2-di-(isopropyl amine)-1, 1-(trifluoromethylsulfonyl)-ethylene;
1-(2, 2-di-trifluoromethylsulfonyl-cyclopropyl)-ketone;
1-(2, 2-di-trifluoromethylsulfonyl-vinyl)-4-methyl-benzene;
6, 2-di- trifluoromethylsulfonyl- cyclopropyl carboxylic acid ethyl ester;
(1-p-tolyl-2, 2-di- trifluoromethylsulfonyl-ethyl)-dimethyl phosphate;
1-(di-trifluoromethylsulfonyl-mesyl)-4-chloro-benzene;
(1-methyl-2, 2-di- trifluoromethylsulfonyl-vinyl)-phenyl-amine;
1-(di- trifluoromethylsulfonyl-methyl)-4-tetra-butyl-2, 3, 5, 6- tetrafluoro-benzene;
1-(di-trifluoromethylsulfonyl-methyl)-4-tetra-butyl-2, 3, 5, 6- tetrafluoro-biphenyl;
trimethyl-(pentafluoro-di- trifluoromethylsulfonyl-methyl)-silane;
fluoro-tri- trifluoromethylsulfonyl-methane;
1-(di- trifluoromethylsulfonyl-methyl)-2, 3, 5, 6-tetrafluoro-4- hexyloxy-benzene;

When X, in the formula (I) of the sulfonyl-containing compound, is NR₅, both R₁ and R₂ are CF₃, the sulfonyl-containing compounds of the present invention preferably are:
N-phenyl-di(trifluoromethylsulfonyl) imine (A);
N-2, 6-diisopropylphenyl-di(trifluoromethylsulfonyl) imine(B);
N-(4- methoxyphenyl)-di(trifluoromethylsulfonyl) imine(C);
N-(3-chlorophenyl)- di(trifluoromethylsulfonyl) imine(D);
N-(2-fluorophenyl)- di(trifluoromethylsulfonyl) imine(E);
N-isobutyl- di(trifluoromethylsulfonyl) imine;
N-(2-methoxyethyl)- di(trifluoromethylsulfonyl) imine;
N-ethyl- di(trifluoromethylsulfonyl) imine;
N-benzyl- di(trifluoromethylsulfonyl) imine;
N-cyclohexyl- di(trifluoromethylsulfonyl) imine;
N-(2- phenylethyl)- di(trifluoromethylsulfonyl) imine;
N- thienyl-di(trifluoromethylsulfonyl) imine;
N-cyclohexyl-di(trifluoromethylsulfonyl) imine;
N-(2-m-phenyl)- di(trifluoromethylsulfonyl) imine;
N-(3-fluorophenyl)-di(trifluoromethylsulfonyl) imine;
N-(4-fluorophenyl)-di(trifluoromethylsulfonyl) imine;
N-(3-methylphenyl)-di(trifluoromethylsulfonyl) imine;
N-(4- methylphenyl)-di(trifluoromethylsulfonyl) imine;
N-(4-carboxylphenyl)-di(trifluoromethylsulfonyl) imine;
N-(3-carboxylphenyl)-di(trifluoromethylsulfonyl) imine;
di(trifluoromethylsulfonyl) imine;
N-fluoro-di(trifluoromethylsulfonyl) imine;
N-(2-pyridine)-di(trifluoromethylsulfonyl) imine;
N-(5-chloro-2-pyridyl)-di(trifluoromethylsulfonyl) imine;
N-trimethylsilyl-di(trifluoromethylsulfonyl) imine;
N-isopropyl-di(trifluoromethylsulfonyl) imine.

The structure formulas of several sulfuryl amine compounds of the present invention are provided:

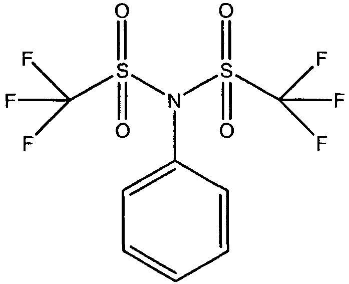

### N-phenyl-di(trifluoromethylsulfonyl) imine (A)

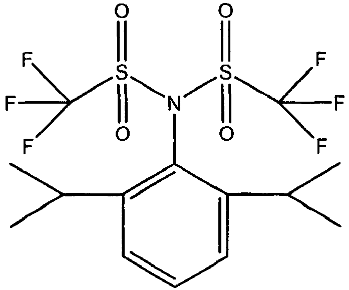

### N-(2, 6-diisopropylphenyl)-di(trifluoromethylsulfonyl) imine (B)

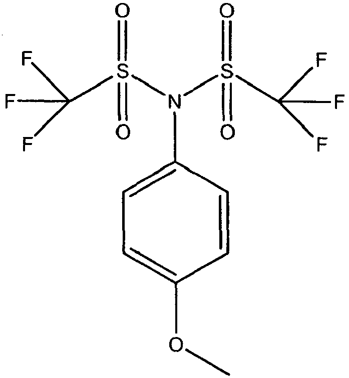

### N-(4- methoxyphenyl)-di(trifluoromethylsulfonyl) imine (C)

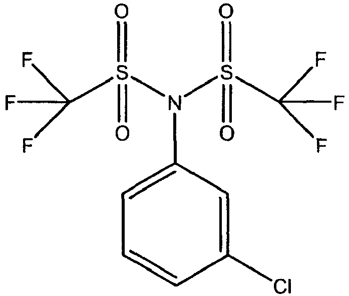

### N-(3-chlorophenyl)-di(trifluoromethylsulfonyl) imine (D

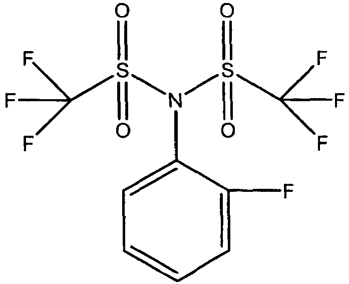

### N-(2-fluorophenyl)-di(trifluoromethylsulfonyl) imine (E)

The general synthetic methods for forming the sulfuryl imine compounds comprise the steps of:

Dissolving organic amines and other alkaline substances in organic solvents, cooling to low temperature to obtain a first mixture, adding sulfoacid anhydride by droplet to the first mixture under electromagnetic agitating, reacting for 1 to 3 hours, and elevating naturally to room temperature; after agitating for 1 to 24 hours at room temperature to obtain a second mixture, diluting, isolating, and drying organic phase of the second mixture, after filtering and isolating the said organic phase, drying in vacuum to obtain white crystals. The yield is about 50%. The data of the following representative compounds are provided as follows by measuring H-NMR spectrograms with the solvent of CDCl₃:
(A) N-phenyl-di(trifluoromethylsulfonyl) imine:

| | | |
|---|---|---|
| 7.42 ppm | multimodal | 2H aryl group |
| 7.57 ppm | multimodal | 3H aryl group |

(B) N-(2, 6-diisopropylphenyl)-di(trifluoromethylsulfonyl) imine:

| | | |
|---|---|---|
| 1.26 ppm | bimodal | 12H CH₃ |
| 7.29 ppm | trimodal | 2H aryl group |
| 7.50 ppm | multimodal | 1H aryl group |

(C) N-(4-methoxyphenyl)-di(trifluoromethylsulfonyl) imine:

| | | |
|---|---|---|
| 3.86 ppm | trimodal | 3H CH₃ |
| 6.98 ppm | multimodal | 2H aryl group |
| 7.30 ppm | multimodal | 2H aryl group |

(D) N-(3-chlorophenyl)- di(trifluoromethylsulfonyl) imine:

| | | |
|---|---|---|
| 7.31 ppm | bimodal | 1H aryl group |
| 7.41 ppm | bimodal | 1H aryl group |
| 7.47 ppm | bimodal | 1H aryl group |
| 7.57 ppm | bimodal | 1H aryl group |

(E) N-(2-fluorophenyl)-di(trifluoromethylsulfonyl) imine having main data for spectrogram of:

| | | | | | | | | |
|---|---|---|---|---|---|---|---|---|
| 486.8 | 485.8 | 378.4 | 355.5 | 314.2 | 243.6 | 161.3 | 130.4 | 102.3 |

The sulfonyl-containing compound of the present invention, when X in the formula (I) of the sulfonyl-containing compound is PR₆, both R₁ and R₂ are CF₃, preferably is phosphine-phenyl-trifluoromethylsulfonyl phosphine; when X in the formula (I) of the sulfonyl-containing compound is O, both R₁ and R₂ are CF₃, is trifluoromethysufonic anhydride.

The titanium compound (2) in the catalyst of the present invention is selected from the group consisting of titanium halide and titanium alcohol halide, preferably is titanium tetrachloride. The precursor of the active magnesium halide (1) is selected from the group consisting of RMgX, MgR₂, MgCl₂·mROH, Mg(OR)₂, XₙMg(OR)₂₋ₙ or the mixture of magnesium halide and titanium alcohol, wherein m is 1 to 3, 0<n<2, X is halogen, and R is C₁ to C₂₀ hydrocarbonyl.

Another object of the present invention is to provide two methods for preparing olefin polymerization solid catalyst. The first method for preparing the catalyst comprises the steps of:
(i) dissolving or melting the active magnesium halide (1) formed by magnesium chloride precursor in the dispersant;
(ii) adding nonionic surface active agent to emulsify the above active magnesium halide in the organic liquid emulsifying medium, and dispersing the active magnesium halide for 0.5 to 3 hours under mechanical agitating of 1000 to 3500 rpm;
(iii) precipitating the active magnesium halide by adding precipitant, filtering and drying to obtain active magnesium halide solid particles;
(iv) treating the active magnesium halide solid particles with alkyl aluminum for 0.5 to 3 hours at 40-80°C firstly, adding the electron donor (3) to obtain a first mixture, then treating the first mixture with the organic solution of titanium compound (2) for several times to obtain a second mixture, and filtering, washing and drying the second mixture to obtain a solid catalyst.

In the first method, the active magnesium halide (1) in step (i) comprises solid particle support of magnesium halide alcoholate, such as MgCl₂·X(n-BuOH) (wherein 0.1≤X≤2) disclosed in CN90109183.9, of which the specific surface area is 1-20m²/g, and porosity is 1-2 cm²/g, and in which the support is consisted of solid particles having an average particle size of µm, and particle size distribution (D90/D10) is less than or equal to 7 (D90 and D10 are the diameters of the particles corresponding to 90% and 10% of a particle size cumulative distribution on a weight basis, respectively, from large to small). The dispersant in step (i) is alkane having a boiling point of less than 150°C, such as hexane, or heptane. The nonionic surface active agent in step (ii) is selected from the group consisting of the surface active agents having a hydrophile-lipophile balance value (HLB) of 0-9, preferably 1-4, such as sorbitan trioleate. The organic liquid emulsifying medium in step (ii) is preferably selected from the group consisting of heavy hydrocarbons, such as paraffin oil having a viscocity of 0.1-1 Pa·s at 20°C. The precipitant in step (iii) is a silicon chloride derivative having a formula of SiClXR_{4 - X} (wherein 1≤X≤4, R is saturated hydrocarbon containing 1-4 carbon atoms), such as SiCl₄. The organic solvent used to the titanium compound (2) in step (iv) is halogenated hydrocarbon, such as 1,2-dichloroethane. The organic solution of titanium compound (2) has a concentration of 0.1-10 mol/L, preferably 1M, and can be used to treat with the support for several times, in which at least one treating temperature is within -40 to 0 °C, preferably -30 to 0°C, another is within 70 to 100°C, preferably 80 to 90°C and the titanium compound has a total amount of 1-100 at the mole ratio of Ti/Mg, preferably 1-10. The electron donor in step (iv) is a sulfonyl-containing compound (3), such as trifluoromethysufonic anhydride, N-phenyl-di(trifluoromethylsulfonyl) imine; N-(2, 6-diisopropylphenyl)-di(trifluoromethylsulfonyl) imine; N-(4-methoxy phenyl)-di(trifluoromethylsulfonyl) imine; N-(3-chlorophenyl)-di(trifluoromethyl sulfonyl) imine; N-(2-fluorophenyl)-di(trifluoromethylsulfonyl) imine. The mole ratio of internal electron donor to Mg is 0.1-2, preferably 0.5-1. The sulfonyl-containing compound (3) can be added in one or more times directly or in the manner of solution.

The second method for preparing the catalyst of the present invention comprises the steps of:
(i) adding spherical magnesium chloride alcoholate particles to the solution of titanium tetrachloride and reacting for 0.1 to 3 hours at a temperature of -40 to 0°C to obtain a first mixture;
(ii) elevating the temperature to 40 to 100°C gradually, adding internal electron donor to the first mixture and reacting for 0.5 to 3 hours to obtain a second mixture;
(iii) adding titanium compound (2) to the second mixture at temperature of 80 to 140 °C, reacting for 0.5 to 3 hours to obtain resulting mixture and filtering the resulting mixture, optionally repeating this step for 1 to 3 times;
(iv) washing and drying the resulting mixture to obtain a spherical solid catalyst.

In the second method, the spherical magnesium chloride alcoholate in step (i) has a formula of Mg(OR¹)ₘX₂₋ₘ·n(R²OH), wherein n is an integer or fraction of 0<n<4, which is disclosed in CN1034736C. The spherical magnesium chloride alcoholate can be treated with titanium compound (2) for several times, in which at least one treating temperature is within -40 to 0°C, preferably -30 to 0°C, another is within 80 to 140°C, preferably 90 to 130°C, and the titanium compound has a total amount of 1-200 at the mole ratio of Ti/Mg, preferably 1-100. The electron donor in step (ii) is the same with the first method.

Yet another object of the present invention is to provide a solid catalyst system for use in olefin polymerization, comprising the solid catalyst synthesized by the above two methods, cocatalyst and external electron donor, wherein the cocatalyst is alkyl aluminum compound having a formula of AlRₙX₍₃₋ₙ₎, in which R is alkyl, aralkyl, aryl containing 1-20 carbon atoms; X is halogen, and n is an integer within 0≤n≤3; trimethyl aluminum, triethyl aluminum, triisobutyl aluminium, trioctyl aluminium, monohydrogen diethyl aluminum, monohydrogen diisobutyl aluminum, aluminum diethyl monochloride (DEAC), diisobutyl aluminum monochloride and ethyl aluminium dichloride etc. The external electron donor is selected from the group consisting of siloxane compound having a formula of RₙSi(OR₁)₄₋ₙ, wherein R is C₁-C₁₀ alkyl, cycloalkyl and aryl; R₁ is alkyl having 1-4 carbon atoms; and n is an integer within 0≤n≤3, such as phenyl trimethoxysilane (PTMS), phenyl triethoxysilane (PTES) and diphenyl dimethoxy silane (DPDMS), preferably phenyl triethoxysilane and diphenyl dimethoxy silane.

When the solid catalyst system provided by the present invention is used in olefin polymerization, the mole ratio of titanium in the solid catalyst to aluminum in the cocatalyst is 1:1-1:2000, preferably 1:10-1:500; the mole ratio of external electron donor to solid catalyst is 1-100, preferably 1-50 at the mole ratio of Si/Ti. The polymerization process can be slurry method, bulk method or gas phase method with polymerization temperature of 20-100 °C, preferably 40-90 °C.

### Detailed Description of the Preferred Embodiments

The present invention will be illustrated by the examples hereinafter, but not limited to those.

The catalysts in the examples are operated with Schlenk instruments under the protection of high-purity nitrogen. The examples are as follows.

### Example 1

45mL anhydrous hexane, 15g anhydrous MgCl₂ and 144mL anhydrous n-butanol were added to 250mL three-neck flask in sequence to make hexane evaporate, and then the temperature was decreased to ambient temperature (around 10°C) to obtain a homogeneous, colorless and transparent solution. The resulting MgCl₂ in n-butanol solution was added into 500mL three-neck flask containing 100mL paraffin oil and 0.32g sorbitan trioleate under agitating for 30 minutes at 1000 rpm to obtain a stable white emulsion. The temperature keep around 35°C, 26mL 5M SiCl₄ in hexane solution was dropped slowly over 40 minutes, and then heated to 50°C for one hours to obtain a first mixture. The first mixture was cooled, settled. The upper paraffin oil of the first mixture was filtered to obtain a second mixture. The second mixture was washed with about 100 mL anhydrous hexane for three times, drained to obtain 6.3g magnesium chloride alcoholate support.

1.3g solid alcoholate support and 30mL anhydrous heptane, and then 0.65 mL triethylaluminium were added to 250mL three-neck flask to obtain a first mixture. The first mixture was heated to 50°C for one hour. The first mixture was filtered, washed with heptaneto obtain a white solid. The obtained white solid was treated with 3.8mmol, 0.3M internal electron donor trifluoromethysufonic anhydride in heptane solution at 90°C for 2 hours to obtain a second mixture. The second mixture was filtered, washed with heptane. The second mixture was kept for 20 minutes after dripping 20mL 1M TiCl₄-1,2-dichloroethane solution at -30°C, and then kept at 80°C for 1 hour. The upper clear solution of the second mixture was filtered. The second mixture was kept 80 °C for 1 hour after dripping 20mL 1M TiCl₄-1,2-dichloroethane solution. And then the second mixture was washed, dried, and drained to obtain 0.43g solid catalyst. The titanium has an amount of 2.28%.

250mL dry three-neck flask was replaced sufficiently with nitrogen, then replaced sufficiently with propylene under the pressure of the system slightly higher than 1.1013×10⁵ Pa. 100mL heptane was added into the flask, heated to around 50°C. A certain AlEt₃ and the catalyst were added at a constant temperature with keeping the temperature for 1 hour. 100mL hydrochloric acid-ethanol solution (5% of hydrochloric acid) was used to make the reaction stop to obtain a polymer. The polymer was washed with anhydrous ethanol and dried in vacuum to obtain 6.27g polypropylene. The activity of the catalyst is 14929g polymer/g (Ti) h⁻¹, the isotacticity is 92%, which is measured by extracting the polymer with boiling heptane for 6 hours.

### Example 2

Similar to example 1, but difference in that N-methoxyphenyl-di(trifluoromethyl sulfonyl) imine was used as the electron donor to obtain 0.65g solid catalyst, in which the titanium has an amount of 3.86%. The activity of the catalyst is 5518g polymer/g (Ti) h⁻¹, and the isotacticity is 93%.

### Example 3

Similar to example 1, but difference in that N-phenyl-di(trifluoromethylsulfonyl) imine was used as the electron donor to obtain 0.49g solid catalyst, and the titanium has an amount of 3.95%. The activity of the catalyst is 11797g polymer/g (Ti) h⁻¹, and the isotacticity is 90%.

### Example 4

Similar to example 1, but difference in that N-(2,6-diisopropylphenyl)-di(trifluoro methylsulfonyl) imine was used as the electron donor to obtain 0.43g solid catalyst, and the titanium has an amount of 3.94%. The activity of the catalyst is 14645g polymer/g (Ti) h⁻¹, and the isotacticity is 91%.

### Example 5

Similar to example 1, but difference in that N-m-chlorophenyl-di(trifluoro methylsulfonyl) imine was used as the electron donor to obtain 0.51g solid catalyst, and the titanium content has an amount of 3.72%. The activity of the catalyst is 31371g polymer/g (Ti) h⁻¹, and the isotacticity is 90%.

### Example 6

Similar to example 2, but difference in that phenyl trimethoxysilane was used as the external electron donor during propylene polymerization. The activity of the catalyst is 2462g polymer/g (Ti) h⁻¹, and the isotacticity is 98%.

### Example 7

Similar to example 3, but difference in that phenyl trimethoxysilane was used as the external electron donor during propylene polymerization. The activity of the catalyst is 11494g polymer/g (Ti) h⁻¹, and the isotacticity is 92%.

### Example 8

Similar to example 4, but difference in that phenyl trimethoxysilane was used as the external electron donor during propylene polymerization. The activity of the catalyst is 3858g polymer/g (Ti) h⁻¹, and the isotacticity is 97%.

### Example 9

2.0g spherical MgCl₂·2.85C₂H₅OH support was slowly added to the reaction flask filled with 56 mL TiCl₄ at -25°C, heated gradually to 80 °C. And then 2mmol internal electron donor of N-m-chlorophenyl-di(trifluoromethylsulfonyl) imine was added the flask. The temperature was kept for 30 minutes, and then heated to 130°C for reacting 2 hours to obtain a first mixture. The first mixture was filtered, in which 30 mL TiCl₄ was added to react for 2 hours at 130 °C to obtain a second mixture. The second mixture was washed for 6 times with n-hexene, and dried in vacuum to obtain 1.1g catalyst, and the titanium has an amount of 2.93%.

250mL dry three-neck flask was replaced sufficiently with nitrogen, then replaced sufficiently with propylene under the pressure of the system slightly higher than 1.1013×10⁵ Pa. 100mL heptane was added into the flask, heated to around 50°C. A certain AlEt₃ and the catalyst were added at a constant temperature with keeping the temperature for 1 hour. 100mL hydrochloric acid-ethanol solution (5% of hydrochloric acid) was used to make the reaction stop to obtain a polymer. The polymer was washed with anhydrous ethanol and dried in vacuum to obtain 6.27g polypropylene. The activity of the catalyst is 6143g polymer/g (Ti) h⁻¹, and the isotacticity is 97%.

### Example 10

Similar to example 9, but difference in that 1mmol N-m-chlorophenyl-di (trifluoromethylsulfonyl) imine was used as the electron donor to obtain 1.0g spherical catalyst, and the titanium has an amount of 3.29%. The activity of the catalyst is 10000g polymer/g (Ti) h⁻¹, and the isotacticity is 94%.

### Example 11

Similar to example 9, but difference in that 0.5mmol N-m-chlorophenyl-di (trifluoromethylsulfonyl) imine was used as the internal electron donor to obtain 1.1 g spherical catalyst, and the titanium has an amount of 2.98%. The activity of the catalyst is 7114g polymer/g (Ti) h⁻¹, and the isotacticity is 93%.

### Example 12

Similar to example 9, but difference in that 1.5mmol N-m-chlorophenyl-di (trifluoromethylsulfonyl) imine was used as the internal electron donor to obtain 1.2g spherical catalyst, and the titanium has an amount of 2.57%. The activity of the catalyst is 5019g polymer/g (Ti) h⁻¹, and the isotacticity is 96%.

### Example 13

1.2 g spherical catalyst having titanium amount of 2.81% is obtained by adding 1.5mmol N-m-chlorophenyl-di (trifluoromethylsulfonyl) imine as the internal electron donor. The bulk polymerization is 3L: in a stainless steel reaction boiler, 10.8mg solid catalyst, 2.5mL 1.0M triethyl aluminum, 2.5mL 0.1M diphenyl dimethoxy silane, are added under the hydrogen partial pressure of 0.2 MPa at a reaction temperature of 70 °C for 1 hour. The catalyst has an activity of 1.138×10⁶g polymer/g (Ti) h⁻¹, an isotacticity of 99%, and melt index of 3.119/10 min.

### Example 14

Similar to example 13, but difference in that the partial pressure of hydrogen is 1.0 MPa. The catalyst has an activity of 1.236×10⁶g polymer/g (Ti) h⁻¹, an isotacticity of 98%, and melt index of 18.41 g/10 min.

### Example 15

Similar to example 13, but difference in that N-methoxyphenyl-di (trifluoromethylsulfonyl) imine is used as the electron donor. The catalyst has an activity of 1.013×10⁶g polymer/g (Ti) h⁻¹, an isotacticity of 98%.

### Comparative example 1

Similar to example 1, but difference in that 1.4g solid catalyst is obtained by adding 2.4 mL dioctylphthalate (DOP), 2g magnesium chloride alcoholate support. The catalyst has an activity of 301g polymer/g (Ti) h⁻¹, an isotacticity of 72%.

### Comparative example 2

Similar to example 9, but difference in that 0.54mL dioctylphthalate (DOP) is added. The catalyst has an activity of 58g polymer/g (Ti) h⁻¹, an isotacticity of 98%.

### Comparative example 3

Similar to comparative example 2, but difference in that polymerization method is bulk polymerization (similar to example 13). The catalyst has an activity of 19g polymer/g (Ti) h⁻¹, an isotacticity of 97.6%.

### Industrial applications

The solid catalyst of the present invention has extremely high activity in propylene polymerization. For example, the catalyst, in which N-m-chlorophenyl-di(trifluoro methylsulfonyl) imine is used as the internal electron donor and no external electron donor is used, has an activity of 31371g polymer/g (Ti) h⁻¹ (50°C, 1hour, normal pressure slurry polymerization). Such catalyst has extremely high activity, therefore, the residual amounts of the catalyst and co-catalyst in the prepared polymer are reduced greatly, and various performances of the polymer product are much better. When the catalyst is applied to the stereotactic polymerization of propylene, the polymer has higher isotacticity. For example, when using the catalyst, in which N-methoxyphenyl-di(trifluoromethylsulfonyl) imine is used as the internal electron donor and phenyl trimethoxysilane as the external electron donor during normal pressure polymerization, the isotacticity of the polypropylene is 98%. If external electron donor compounds commonly used in the industry such as diphenyl dimethoxy silane, are used, the bulk polymerization has an activity as high as 50 kg polymer/g (catalyst) h⁻¹, a good hydrogen response, and isotacticity of up to 99%, and thereby strong industrial applicability can be achieved. Another feature of the catalyst system of the present invention is that the catalyst of the present invention has better copolymerization of propylene and ethylene than that of the traditional electron donor catalyst. The catalyst of the present invention is more suitable for producing copolymerization products of random, or block.

## Claims

1. An olefin polymerization catalyst, comprising (1) an active magnesium halide, (2) a titanium compound having at least one Ti-halide bond supported thereon, and (3) an electron donor selected from the group consisting of one or more sulfonyl-containing compounds having the following formula (I): 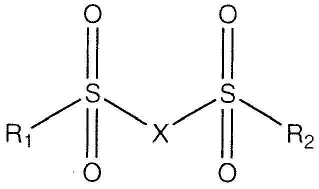 Wherein X is selected from the group consisting of the elements of (di-substituted) Group 14, (mono-substituted) Group 15, or Group 16, in which the substitutes are mono-cycle, multi-cycle or heteroatom-containing cyclic groups, or aliphatic linear groups: R₁ and R₂ can be identical or different, selecting from the group consisting of hydrogen atom, halogen, (substituted) alkyl, cycloalkyl, aryl, aralkyl or alkylaryl, or heteroatom-containing ring.

2. The olefin polymerization catalyst of claim 1, wherein X, in the sulfonyl-containing compounds of formula (I), can be selected from the group consisting of C(R₃)(R₄), Si(R₃)(R₄), Sn(R₃)(R₄), Pb(R₃)(R₄), N(R₅), P(R₆), As(R₆), O, S, Se or Te, wherein R₃ and R₄ can be identical or different, R₃, R₄, R₅ and R₆ can be selected from the group consisting of hydrogen atom, halogen, (substituted) alkyl, cycloalkyl, aryl, aralkyl or alkylaryl, alkyl alkenyl, alkenyl alkyl, alkyl alkynyl, heteroatom-containing ring or acyl, respectively; R₃ and R₄ also can constitute cycloalkyl or cycloalkenyl with C.

3. The olefin polymerization catalyst of claim 1, wherein sulfonyl-containing compounds are selected from the group consisting of disulfonyl alkane, disulfonyl alkene, disulfonyl cyclic hydrocarbon, disulfonyl silane, disulfonyl cyclosilane, disulfonyl dihydroxy tin, disulfonyl dihydroxy lead, and heteroatom-containing derivatives thereof: disulfonyl imines, disulfonyl phosphinidenes, disulfonyl arsenious, and heteroatom-containing derivatives thereof, (substituted) sulfoacid anhydride, and sulfo- or seleno- derivatives thereof.

4. The olefin polymerization catalyst of claim 1, wherein sulfonyl-containing compounds are selected from the group consisting of di(trifluoromethylsulfonyl) methanes
[di(trifluoromethylsulfonyl) methyl] benzene;
1, 1-di(trifluoromethylsulfonyl)-ethane:
[chloro-(trifluoromethylsulfonyl)-methylsulfonyl]-trifluro-methane;
[bromo-(trifluoromethylsulfonyl)-methylsulfonyl]-trifluro-methane;
dichloro-di-trifluoromethylsulfonyl-methane:
dibromo-di-trifluoromethylsulfonyl-methane;
2-[2, 2-di-(trifluoromethylsulfonyl)-vinyl]-1H-azole;
4-[2, 2-di-(trifluoromethylsulfonyl)vinyl]-morpholine;
2-[2, 2-di-(trifluoromethylsulfonyl)-vinyl]-1H-indole;
trifluro-[methoxy-(trifluoromethylsulfonyl)-methylsulfonyl]-methane;
1-chloro-1,-1-di(trifluoromethylsulfonyl)-ethane;
1-bromo-1, 1-di(trifluoromethylsulfonyl)-ethane;
4, 4-di-(trifluoromethylsulfonyl)-1-butene;
2, 3-di-(trifluoromethylsulfonyl)-1-propanol;
1, 1-di-(trifluoromethylsulfonyl)-pentane;
4-bromo-4, 4-di-(trifluoromethylsulfonyl)-1-butene:
3-bromo-5-chloro-1, 1-di-(trifluoromethylsulfonyl)-pentane;
3-bromo-1, 1-di-(trifluoromethylsulfonyl)-nonane;
[2, 2-di-(trifluoromethylsulfonyl)]-ethyl-benzene:
3-bromo-5, 5-di-(trifluoromethylsulfonyl)- pentanoic acid;
1, 1-di-(trifluoromethylsulfonyl)-propylene;
2, 2-di-(trifluoromethylsulfonyl)-vinyl amine;
[2, 2-di-(trifluoromethylsulfonyl)-vinyl]-dimethyl-amine;
[3,3-di-(trifluoromethylsulfonyl)-allyl]-benzene;
1-[2, 2-di-(trifluoromethylsulfonyl)-vinyl]-naphthalene;
4-[2, 2-di-(trifluoromethylsulfonyl)-vinyl]-2-ethoxy-phenol;
1-[2, 2-di-(trifluoromethylsulfonyl)-vinyl]-4-nitro-benzene;
(2, 2-di-trifluoromethylsulfonyl-vinyl-benzene;
7, 7-di-(trifluoromethylsulfonyl)-bicyclic[4, 1, 0]-heptane;
1-[di-(trifluoromethylsulfonyl)-methyl]-4-methyl-benzene;
di-(trifluoromethylsulfonyl)- ketene;
1-[di-(trifluoromethylsulfonyl)-methylene]-pyrimidine;
[di-(trifluoromethylsulfonyl)-methylene]-triphenyl-λ⁵-phosphorus;
1-[di-(trifluoromethylsulfonyl)-methyl]-4-fluoro-benzene;
difluoro-di- trifluoromethylsulfonyl-methane;
3, 2-di- trifluoromethylsulfonyl-cyclopropane carboxylic acid ethyl ester:
trifluoro-(fluoro-trifluoromethylsulfonyl-sulfonylmethyl)-methane:
1-(di- trifluoromethylsulfonyl-methyl)-2, 3, 4, 5, 6- pentafluorophenyl:
{4-[2, 2-di-(trifluoromethylsulfonyl)-vinyl]-phenyl}-diethyl-amine;
{4-[4, 4-di-(trifluoromethylsulfonyl)-butyl-1, 3-diethyl]-phenyl}-dimethyl-amine:
2-[2, 2-di-(trifluoromethylsulfonyl)-ethyl]-malonic acid;
2-[2, 2-di-(trifluoromethylsulfonyl)-ethyl]-3-oxo-ethyl butyrate;
2-[2, 2-di-(trifluoromethylsulfonyl)-ethyl]-2-bromo- diethyl malonate;
1, 1,3,3-tetra-(trifluoromethylsulfonyl)-propane;
1, 1, 2,2-tetra-(trifluoromethylsulfonyl)-ethane;
trifluoro-[methoxyl-(trifluoromethylsulfonyl)-mesyl]-methane;
[di-(trifluoromethylsulfonyl)-mesyl]- trifluoro-methane;
di-(trifluoromethylsulfonyl)-vinyl ketone;
2, 2-di-(trifluoromethylsulfonyl)-ethyl malonate;
[(dimethyl-λ⁴-sulfa-alkenyl)-(trifluoromethylsulfonyl)-mesyl]- trifluoro-methane;
1, 1-di-ethylsulfa-2,2-di-(trifluoroamethylsulfonyl)-ethylene;
1-[di-(trifluoromethylsulfonyl)-methyl]-4-iodo-benzene;
1-[di-(trifluoromethylsulfonyl)-methyl]-4-fluoro-benzene;
N-[di-(trifluoromethylsulfonyl)-methylene]-N'-(4-nitro-benzene)-hydrazine;
2, 2-di-(isopropylamine)-1, 1-(trifluoromethylsulfonyl)-ethylene;
1-(2, 2-di-trifluoromethylsulfonyl-cyclopropyl)-ketone;
1-(2, 2-di-trifluoromethylsulfonyl-vinyl)-4-methyl-benzene;
3, 2-di-trifluoromethylsulfonyl-cyclopropyl carboxylic acid ethyl ester;
(1-p-tolyl-2, 2-di-trifluoromethylsulfonyl-ethyl)-dimethyl phosphate;
1-(di-trifluoromethylsulfonyl-mesyl)-4-chloro-benzene;
(1-methyl-2, 2-di-trifluoromethylsulfonyl-vinyl)-phenyl-amine;
1-(di-trifluoromethylsulfonyl-methyl)-4-tetra-butyl-2, 3, 5, 6-tetrafluoro-benzene;
1-(di-trifluoromethylsulfonyl-methyl)-4-tetra-butyl-2, 3, 5, 6-tetrafluoro-biphenyl;
trimethyl-(pentafluoro-di-trifluoromethylsulfonyl-methyl)-silane;
fluoro-tri-trifluoromethylsulfonyl-methane;
1-(di-trifluoromethylsulfonyl-methyl)-2, 3, 5, 6-tetrafluoro-4-hexyloxy-benzene;
N-phenyl-di(trifluoromethylsulfonyl)imine;
N-2, 6-diisopropylphenyl-di(tritluoromethylsulfonyl)imine;
N-(4-methoxyphenyl)-di(trifluoromethylsulfonyl)imine;
N-(3-chlorophenyl)-di(trifluoromethylsulfonyl)imine;
N-(2-fluorophenyl)-di(trifluoromethylsulfonyl) imine;
N-isobutyl-di(trifluoromethylsulfonyl) imine;
N-(2-methoxyethyl)-di(trifluoromethylsulfonyl) imine;
N-ethyl-di(trifluoromethylsulfonyl) imine;
N-benzyl-di(trifluoromethylsulfonyl) imine;
N-cyclohexyl-di(trifluoromethylsulfonyl) imine;
N-(2-phenylethyl)-di(trifluoromethylsulfonyl) imine;
N- thienyl-di(trifluoromethylsulfonyl) imine;
N-cyclohexyl-di(trifluoromethylsulfonyl) imine;
N-(2-phenyl)-di(trifluoromethylsulfonyl) imine;
N-(4-fluorophenyl)-di(trifluoromethylsulfonyl) imine;
N-(3-methylphenyl)-di(trifluoromethylsulfonyl) imine;
N-(4- methylphenyl)- di(trifluoromethylsulfonyl) imine;
N-(4-carboxylphenyl)-di(trifluoromethylsulfonyl) imine;
N-(3-carboxylphenyl)-di(trifluoromethylsulfonyl) imine;
di(trifluoromethylsulfonyl) imine;
N-fluoro-di(trifluoromethylsulfonyl) imine;
N-(2-pyridine)-di(trifluoromethylsulfonyl) imine;
N-(5-chloro-2-pyridyl)-di(trifluoromethylsulfonyl) imine;
N-trimethylsilyl-di(trifluoromethylsulfonyl) imine;
N-isopropyl-di(trifluoromethylsulfonyl) imine;
phosphine-phenyl-di(trifluoromethylsulfonyl)phosphinidene;
trifluoromethysufonic anhydride.

5. The olefin polymerization catalyst of claim 1. wherein the titanium compound (2) is selected from the group consisting of titanium halide and titanium alcohol halide.

6. The olefin polymerization catalyst of claim 1, wherein the titanium compound (2) is titanium tetrachloride.

7. The olefin polymerization catalyst of claim 1, wherein the precursor of the active magnesium halide (1) is selected from the group consisting of RMgX, MgR₂, MgCl₂ •mROH, Mg(OR)₂, XₙMg(OR)₂₋ₙ or the mixture of magnesium halide and titanium alcohol, wherein m is 1 to 3, 0<n<2, X is halogen, and R is C1 to C20 hydrocarbonyl.

8. A method for preparing the olefin polymerization catalyst of claim 1, comprising the steps of:
(i) dissolving or melting the active magnesium halide (1) formed by magnesium chloride precursor in the dispersant to obtain a solution;
(ii) adding nonionic surface active agent to the solution to emulsify the above active magnesium halide in the organic liquid emulsifying medium, and dispersing the active magnesium halide for 0.5 to 3 hours under mechanical agitating of 1000 to 3500 rpm to obtain an emulsion;
(iii) precipitating the active magnesium halide by adding precipitant to the emulsion, filtering and drying to obtain active magnesium halide solid particles;
(iv) treating the active magnesium halide solid particles with alkyl aluminum for 0.5 to 3 hours at 40-80°C firstly, adding the electron donor (3) to obtain a first mixture, then treating the first mixture with the organic solution of titanium compound (2) for several times to obtain a second mixture, and filtering, washing and drying the second mixture to obtain a solid catalyst;
wherein the dispersant is alkane having a boiling point less than 150°C;
the nonionic surface active agent has a hydrophile-lipophile balance value (HLB) of 0-9;
the organic liquid emulsifying medium is selected from the group consisting of heavy hydrocarbons;
the precipitant is a silicon chloride derivative having a formula of SiC1XR_{4-X} (in which 1≤X≤4, R is saturated hydrocarbon containing 1-4 carbon atoms);
the organic solvent used in the organic solution of titanium compound (2) is halogenated hydrocarbon;
the solution of titanium compound (2) has a concentration of 0.1-10 mol/L, and is used to treat with the support for several times, in which at least one treating temperature is within -40 to 0°C, another is within 70 to 100°C, and the titanium compound has a total amount of 1-100 at the mole ratio of Ti/Mg;
the mole ratio of electron donor to Mg is 0.1-2.

9. A method for preparing the olefin polymerization catalyst of claim 1, comprising the steps of:
(i) adding spherical magnesium chloride alcoholate particles to the solution of titanium tetrachloride and reacting for 0.1 to 3 hours at a temperature of -40 to 0°C;
(ii) elevating the temperature to 40 to 100°C gradually, adding internal electron donor and reacting for 0.5 to 3 hours;
(iii) adding titanium compound (2) at a temperature of 80 to 140°C, reacting for 0.5 to 3 hours and filtering, and optionally repeating step (iii) for 1 to 3 times;
(iv) washing and drying to obtain a spherical solid catalyst;
wherein spherical magnesium chloride alcoholate and titanium compound (2) are reacted for several times, in which at least one reacting temperature is within -40 to 0°C, another is within 80 to 140°C, and the titanium compound has a total amount of 1-200 at the mole ratio of Ti/Mg; the electron donor is the same with that in claim 8.

10. A solid catalyst for catalyzing olefin polymerization comprising the olefin polymerization catalyst obtained by the method of claim 8 or claim 9. co-catalyst and external electron donor,
wherein the co-catalyst is alkyl aluminum compound having a formula of AlRₙX₍₃₋ₙ₎, in which R is alkyl, aralkyl, or aryl having 1-20 carbon atoms; X is halogen, and n is an integer within 0≤n≤3;
the external electron donor is selected from the group consisting of siloxane compounds having a formula of RnSi(OR₁)₄₋ₙ, wherein R is C₁-C₁₀alkyl, cycloalkyl and aryl; R1 is alkyl having 1-4 carbon atoms; and n is an integer within 0≤n≤3;
the mole ratio of titanium in the solid catalyst to aluminum in the co-catalyst is 1:1-1:2000:
the mole ratio of external electron donor to the solid catalyst is 1-100 at the mole ratio of Ti/Mg.

11. The solid catalyst for catalyzing olefin polymerization of claim 10, wherein the co-catalyst is trimethyl aluminum, triethyl aluminum, triisobutyl aluminium, trioctyl aluminium, monohydrogen diethyl aluminum, monohydrogen diisobutyl aluminum, aluminum diethyul monochloride, diisobutyl aluminum chloride or ethylaluminium dichloride.

12. The solid catalyst for catalyzing olefin polymerization of claim 10, wherein the external electron donor is phenyl trimethoxysilane, phenyl triethoxysilane or diphenyl dimethoxy silane.

13. A method for polymerizing olefin, comprising polymerizing olefin in the presence of the solid catalyst for catalyzing olefin polymerization of claim 10.

## Patentansprüche

1. Olefinpolymerisationskatalysator, umfassend (1) ein aktives Magnesiumhalid, (2) eine Titanverbindung mit wenigstens einer darauf gestützten Ti-Halidbindung und (3) einen Elektronendonor, der aus der aus einer oder mehreren sulfonylhaltigen Verbindung(en) bestehenden Gruppe mit der folgenden Formel (I) ausgewählt ist: 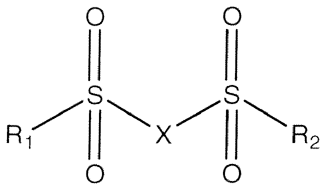 wobei X aus der aus den Elementen der (di-substituierten) Gruppe 14, der (monosubstituierten) Gruppe 15 oder Gruppe 16 bestehenden Gruppe ausgewählt ist, wobei die Substituten monozyklisch, multizyklisch oder heteroatomhaltige zyklische Gruppen oder aliphatische lineare Gruppen sind, R₁ und R₂ identisch oder unterschiedlich sein können, wobei sie aus der aus Wasserstoffatom, Halogen, (substituiertem) Alkyl, Cycloalkyl, Aryl, Aralkyl oder Alkylaryl oder einem heteroatomhaltigen Ring bestehenden Gruppe ausgewählt sind.

2. Olefinpolymerisationskatalysator nach Anspruch 1, wobei X in den sulfonylhaltigen Verbindungen der Formel (I) aus der aus C(R₃)(R₄), Si(R₃)(R₄), Sn(R₃)(R₄), Pb(R₃)(R₄), N(R₅), P(R₆), As(R₆), O, S, Se oder Te bestehenden Gruppe ausgewählt ist, wobei R₃ und R₄ identisch oder unterschiedlich sein können, R₃, R₄, R₅ und R₆ jeweils aus der aus Wasserstoffatom, Halogen, (substituiertem) Alkyl, Cycloalkyl, Aryl, Aralkyl oder Alkylaryl, Alkylalkenyl, Alkenylalkyl, Alkylalkynyl, heteroatomhaltigem Ring oder Acyl bestehenden Gruppe ausgewählt sind, R₃ und R₄ auch Cycloalkyl oder Cycloalkenyl mit C bezeichnen können.

3. Olefinpolymerisationskatalysator nach Anspruch 1, wobei sulfonylhaltige Verbindungen aus der aus Disulfonylalkan, Disulfonylalken, zyklischem Disulfonylkohlenwasserstoff, Disulfonylsilan, Disulfonylcyclosilan, Disulfonyldihydroxyzinn, Disulfonyldihydroxyblei und heteroatomhaltigen Derivaten davon, Disulfonyliminen, Disulfonylphosphinidenen, arsenigem Disulfonyl und heteroatomhaltigen Derivaten davon, (substituiertem) Sulfonsäureanhydrid und Schwefel- oder Selenderivaten davon bestehenden Gruppe ausgewählt sind.

4. Olefinpolymerisationskatalysator nach Anspruch 1, wobei sulfonylhaltige Verbindungen aus der aus
[Di-(Trifluormethylsulfonyl)-Methyl]-Benzol,
1,1-Di-(Trifluormethylsulfonyl)-Ethan,
[Chlor-(Trifluormethylsulfonyl)-Methylsulfonyl]-Trifluormethan,
[Brom-(Trifluormethylsulfonyl)-Methylsulfonyl]-Trifluormethan,
Diehlor-Di-Trifluormethylsulfanylmethan,
Dibrom-Di-Trifluormethylsulfonylmethan,
2-[2,2-Di-(Trifluormethylsulfonyl)-Vinyl]-1H-Azol,
4-[2,2-Di-(Trifluormethylsulfonyl)-Vinyl]-Morpholin,
2-[2,2-Di-(Trifluormethylsulfonyl)-Vinyl]-1H-Indol,
Trifluor-[Methoxyl-(Trifluormethylsulfonyl)-Methylsulfonyl]-Methan,
1-Chlor-1,1-Di(Trifluormethylsulfonyl)-Ethan,
1-Brom-1,1-Di(Trifluormethylsulfonyl)-Ethan,
4,4-Di-(Trifluormethylsulfonyl)-1-Buten,
2,3-Di-(Trifluormethylsulfonyl)-1-Propanol,
1,1-Di-(Trifluormethylsulfonyl)-Pentan,
4-Brom-4,4-Di-(Trifluormethylsulfonyl)-1-Buten,
3-Brom-5-Chlor-1,1-Di-(Trifluormethylsulfonyl)-Pentan,
3-Brom-1,1 -Di-(Trifluormethylsulfonyl)-Nonan,
[2,2-Di-(Trifluormethylsulfonyl)]-Ethylbenzol,
3-Brom-5,5-Di-(Trifluormethylsulfonyl)-Pentansäure,
1,1 -Di-(Trifluormethylsulfonyl)-Propylen,
2,2-Di-(Trifluormethylsulfonyl)-Vinylamin,
[2,2-Di-(Trifluormethylsulfonyl)-Vinyl]-Dimethylamin,
[3,3-Di-(Trifluormethylsulfonyl)-Allyl]-Benzol,
1-[2,2-Di-(Trifluormethylsulfonyl)-Vinyl]-Naphtalin,
4-[2,2-Di-(Trifluormethylsulfonyl)-Vinyl]-2-Ethoxyphenol,
1-[2,2-Di-(Trifluormethylsulfonyl)-Vinyl]-4-Nitrobenzol,
(2,2-Di-Trifluormethylsulfonylvinylbenzol,
7,7-Di-(Trifluormethylsulfonyl)-Dicyclo-[4,1,0]-Heptan,
1-[Di-(Trifluormethylsulfonyl) -Methyl]-4-Methylbenzol,
Di-(Trifluormethylsulfonyl)-Keten,
1-[Di-(Trifluormethylsulfonyl)-Methylen]-Pyrimidin,
[Di-(Trifluormethylsulfonyl)-Methylen]-Triphenyl-λ⁵-Phosphor,
1-[Di-(Trifluormethylsulfonyl)-Methyl]-4-Fluorbenzol,
Difluor-Di-Trifluormethylsulfonylmethan,
3,2-Di-Trifluormethylsulfonylcyclopropan-Carbonsäureethylester,
Trifluor-(Fluor-Trifluormethylsulfonyl-Sulfonylmethyl)-Methan,
1-(Di-Trifluormethylsulfonyl-Methyl)-2,3,4,5,6-Pentafluorphenyl,
{4-[2,2-Di-(Trifluormethylsulfonyl)-Vinyl]-Phenyl}-Diethylamin,
{4-[4,4-Di-(Trifluormethylsulfonyl)-Butyl-1,3-Diethyl]-Phenyl}-Dimethylamin,
2-[2,2-Di-(Trifluormethylsulfonyl)-Ethyl]-Malonsäure,
2-[2,2-Di-(Trifluormethylsulfonyl)-Ethyl]-3-Oxoethylbutyrat,
2-[2,2-Di-(Trifluormethylsulfonyl)-Ethyl]-2-Bromdiethylmalonat,
1,1,3,3-Tetra-(Trifluormethylsulfonyl)-Propan,
1,1,2,2-Tetra-(Trifluormethylsulfonyl)-Ethan,
Trifluor-[Methoxyl-(Trifluormethylsulfonyl)-Mesyl]-Methan,
[Di-(Trifluormethylsulfonyl)-Mesyl]-Trifluormethan,
Di-(Trifluormethylsulfonyl)-Vinylketon,
2,2-Di-(Trifluormethylsulfonyl)-Ethylmalonat,
[(Dimethyl-λ⁴-Sulfoalkenyl)-(Trifluormethylsulfonyl)-Mesyl]-Trifluormethan,
1,1-Diethylsulfo-2,2-Di-(Trifluormethylsulfonyl)-Ethylen,
1-[Di-(Trifluormethylsulfonyl)-Methyl]-4-Iodbenzol,
1-[Di-(Trifluormethylsulfonyl)-Methyl]-4-Fluorbenzol,
N-[Di-(Trifluormethylsulfonyl)-Methylen]-N'-(4-Nitrobenzol)-Hydrazin ,
2,2-Di-(Isopropylamin)-1,1-(Trifluormethylsulfonyl)-Ethylen,
1-(2,2-Di-Trifluormethylsulfonylcyclopropyl)-Keton,
1-(2,2-Di-Trifluormethylsulfonylvinyl)-4-Methylbenzol,
3,2-Di-Trifluormethylsulfonylcyclopropyl-Carbonsäureethylester,
(1-p-Tolyl-2,2-Di-Trifluormethylsulfonylethyl)-Dimethylphosphat,
1-(Di-Trifluormethylsulfonylmesyl)-4-Chlorbenzol,
(1-Methyl-2,2-Di-Trifluormethylsulfonylvinyl)-Phenylamin,
1-(Di-Trifluormethylsulfonylmethyl)-4-Tetrabutyl-2,3,5,6-Tetrafluorbenzol,
1-(Di-Trifluormethylsulfonylmethyl)-4-Tetrabutyl-2,3,5,6-Tetrafluordiphenyl,
Trimethyl-(Pentafluor-Di-Trifluormethylsulfonylmethyl)-Silan,
Fluor-Tri-Trifluormethylsulfonylmethan,
1-(Di-Trifluormethylsultonylmethyl)-2,3,5,6-Tetrafluor-4-Hexyloxybenzol,
N-Phenyl-Di-(Trifluormethylsulfonyl)-Imin,
N-2,6-Diisopropylphenyl-Di-(Trifluormethylsulfonyl)-Imin,
N-(4-Methoxyphenyl)-Di-(Trifluormethylsulfonyl)-Imin,
N-(3-Chlorphenyl)-Di-(Trifluormethylsulfonyl)-Imin,
N-(2-Fluorphenyl)-Di-(Trifluormethylsulfonyl)-Imin,
N-Isobutyl-Di-(Trifluormethylsulfonyl)-Imin,
N-(2-Methoxyethyl)-Di-(Trifluormethylsulfonyl)-Imin,
N-Ethyl-Di-(Trifluormethylsulfonyl)-Imin,
N-Benzyl-Di-(Trifluormethylsulfonyl)-Imin,
N-Cyclohexyl-Di-(Trifluormethylsulfonyl)-Imin,
N-(2-Phenylethyl)-Di-(Trifluormethylsulfonyl)-Imin,
N-Thienyl-Di-(Trifluormethylsulfonyl)-Imin,
N-Cyclohexyl-Di-(Trifluormethylsulfonyl)-Imin,
N-(2-Phenyl)-Di-(Trifluormethylsulfonyl)-Imin,
N-(4-Fluorphenyl)-Di-(Trifluormethylsulfonyl)-Imin,
N-(3-Methylphenyl)-Di-(Trifluormethylsulfonyl)-Imin,
N-(4-Methylphenyl)-Di-(Trifluormethylsulfonyl)-Imin,
N-(4-Carboxylphenyl)-Di-(Trifluormethylsulfonyl)-Imin,
N-(3-Carboxylphenyl)-Di-(Trifluormethylsulfonyl)-Imin,
Di-(Trifluormethylsulfonyl)-Imin,
N-Fluor-Di-(Trifluormethylsulfonyl)-Imin,
N-(2-Pyridin)-Di-(Trifluormethylsulfonyl)-Imin,
N-(5-Chlor-2-Pyridyl)-Di-(Trifluormethylsulfonyl)-Imin,
N-Trimethylsilyi-Di-(Trifluormethylsulfonyl)-Imin,
N-Isopropyl-Di-(Trifluormethylsulfonyl)-Imin,
Phosphinphenyl-Di-(Trifluormethylsulfonyl)-Phosphiniden,
Trifluormethylsulfonanhydrid
bestehenden Gruppe ausgewählt sind.

5. Olefinpolymerisationskatalysator nach Anspruch 1, wobei die Titanverbindung (2) aus der aus Titanhalid und Titanalkoholhalid bestehenden Gruppe ausgewählt ist.

6. Olefinpolymerisationskatalysator nach Anspruch 1, wobei die Titanverbindung (2) Titantetrachlorid ist.

7. Olefinpolymerisationskatalysator nach Anspruch 1, wobei der Vorläufer des aktiven Magnesiumhalids (1) aus der aus RMgX, MgR₂, MgCl₂•mROH, Mg(OR)₂, XₙMg(OR)₂₋ₙ bestehenden Gruppe oder aus der Mischung von Magnesiumhalid und Titanalkohol ausgewählt ist, wobei m 1 bis 3 ist, 0 < n < 2 ist, X ein Halogen ist und R ein C1- bis C20-Kohlenwasserstoff ist.

8. Verfahren zum Herstellen des Olefinpolymerisationskatalysators nach Anspruch 1, umfassend die Schritte des:
(i) Lösens oder Schmelzens des durch einen Magnesiumchloridvorläufer gebildeten aktiven Magnesiumhalids (1) in dem Dispergiermittel, um eine Lösung zu erhalten,
(ii) Hinzufügens eines nichtionischen oberflächenaktiven Stoffes zu der Lösung, um das oben genannte aktive Magnesiumhalid in dem flüssigen organischen Emulgiermedium zu emulgieren, und Dispergierens des aktiven Magnesiumhalids für 0,5 bis 3 Stunden unter mechanischem Rühren bei 1.000 bis 3.500 rpm, um eine Emulsion zu erhalten,
(iii) Fällens des aktiven Magnesiumhalids durch Hinzufügen eines Fällungsmittels zu der Emulsion, Filterns und Trocknens, um Festteilchen des aktiven Magnesiumshalids zu erhalten,
(iv) zunächst Behandelns der Festteilchen des aktiven Magnesiumhalids mit Alkylaluminium für 0,5 bis 3 Stunden bei 40-80° C, Hinzufügens des Elektronendonors (3), um eine erste Mischung zu erhalten, dann Behandelns der ersten Mischung mit der organischen Lösung der Titanverbindung (2) für mehrere Male, um eine zweite Mischung zu erhalten, und Filterns, Waschens und Trocknens der zweiten Mischung, um einen Festkatalysator zu erhalten,
wobei das Dispergiermittel Alkan ist, das einen Siedepunkt von weniger als 150° C aufweist,
der nichtionische oberflächenaktive Stoff einen hydrophil-lipophil Ausgleichswert (HLB) von 0-9 aufweist,
das flüssige organische Emulgiermedium aus der aus schweren Kohlenwasserstoffen bestehenden Gruppe ausgewählt ist,
das Fällungsmittel ein Siliciumchloridderivat ist, das die Formel SiClXR₄₋ₓ aufweist (wobei 1 ≤ X ≤ 4 ist, R gesättigter Kohlenwasserstoff ist, das 1-4 Kohlenstoffatome enthält),
das organische Lösungsmittel, das in der organischen Lösung der Titanverbindung (2) verwendet wird, halogenierter Kohlenwasserstoff ist,
die Lösung der Titanverbindung (2) eine Konzentration von 0,1 - 10 mol/L aufweist, und dazu verwendet wird, den Träger mehrere Male zu behandeln, wobei wenigstens eine Behandlungstemperatur innerhalb von -40 bis 0° C liegt, eine andere innerhalb von 70 bis 100° C liegt und die Titanverbindung einen Gesamtgehalt von 1-100 beim Molverhältnis von Ti/Mg aufweist,
das Molverhältnis des Elektronendonors zum Mg 0,1 - 2 ist.

9. Verfahren zum Herstellen des Olefinpolymerisationskatalysator nach Anspruch 1, umfassend die Schritte des
(i) Hinzufügens sphärischer Magnesiumchloridalkoholatteilchen zu der Lösung des Titantetrachlorids und Reagierens für 0,1 bis 3 Stunden bei einer Temperatur von -40 bis 0° C,
(ii) schrittweisen Erhöhens der Temperatur von 40 auf 100° C, Hinzufügens eines internen Elektronendonors und Reagierens für 0,5 bis 3 Stunden,
(iii) Hinzufügens einer Titanverbindung (2) bei einer Temperatur von 80 bis 140° C, Reagierens für 0,5 bis 3 Stunden und Filterns und wahlweise ein- bis dreimaligen Wiederholens des Schrittes (iii),
(iv) Waschens und Trocknens, um einen sphärischen Festkatalysator zu erhalten,
wobei das sphärische Magnesiumchloridalkoholat und die Titanverbindung (2) mehrere Male miteinander reagieren, wobei wenigstens eine Reaktionstemperatur innerhalb von -40 bis 0° C liegt, eine andere innerhalb von 80 bis 140° C liegt und die Titanverbindung einen Gesamtgehalt von 1 - 200 beim Molverhältnis von Ti/Mg aufweist, wobei der Eletronendonor derselbe ist, wie derjenige in Anspruch 8.

10. Festkatalysator zum Katalysieren einer Olefinpolymerisation, umfassend den Olefinpolymerisationskatalysator, der durch das Verfahren nach Anspruch 8 oder Anspruch 9 erhalten ist, Cokatalysator und externen Elektronendonor,
wobei der Cokatalysator eine Alkylaluminiumverbindung ist, die eine Formel AlRₙX₍₃₋ₙ₎ aufweist, wobei R Alkyl, Aralkyl oder Aryl mit 1-20 Kohlenstoffatomen ist, X ein Halogen ist und n eine ganze Zahl zwischen 0 ≤ n ≤ 3 ist,
der externe Elektronendonor aus der aus Siloxanverbindungen mit einer Formel RₙSi(OR₁)₄₋ₙ bestehenden Gruppe ist, wobei R ein C₁-C₁₀ Alkyl, Cycloalkyl und Aryl ist, R₁ ein Alkyl mit 1-4 Kohlenstoffatomen ist und n eine ganze Zahl zwischen 0 ≤ n ≤3 ist,
das Molverhältnis des Titans in dem Festkatalysator zum Aluminium in dem Cokatalysator zwischen 1:1 bis 1:2.000 liegt,
das Molverhältnis des externen Elektronendonors zum Festkatalysator 1-100 beim Molverhältnis von Ti/Mg ist.

11. Festkatalysator zum Katalysieren einer Olefinpolymerisation nach Anspruch 10, wobei der Cokatalysator Trimethylaluminium, Triethylaluminium, Triisobutylaluminium, Trioctylaluminium, Monohydrogendiethylaluminium, Monohydrogendiisobutylaluminium, Aluminiumdiethylmonochlorid, Diisobutylaluminiumchlorid oder Ethylaluminiumdichlorid ist.

12. Festkatalysator zum Katalysieren einer Olefinpolymerisation nach Anspruch 10, wobei der externe Elektronendonor Phenyltrimethoxysilan, Phenyltriethoxysilan oder Diphenyldimethoxysilan ist.

13. Verfahren zum Polymerisieren eines Olefins, umfassend Polymerisieren eines Olefins in der Anwesenheit des Festkatalysators zum Katalysieren einer Olefinpolymerisation nach Anspruch 10.

## Revendications

1. Catalyseur de polymérisation d'oléfine comprenant
(1) un halogénure de magnésium actif, (2) un composé du titane comprenant au moins une liaison Ti-halogénure supportée sur celui-ci, et (3) un donneur d'électrons choisi dans le groupe constitué par un ou plusieurs composés contenant un groupe sulfonyle répondant à la formule (I) suivante : 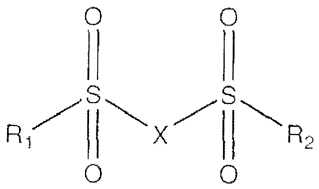 dans laquelle X est choisi dans le groupe constitué par les éléments du groupe 14 (disubstitués), du groupe 15 (monosubstitués) ou du groupe 16, dans lequel les substituants sont des groupes monocycliques, multicycliques ou cycliques contenant un hétéroatome, ou des groupes linéaires aliphatiques ; R₁ et R₂ peuvent être identiques ou différents et choisis dans le groupe constitué par un atome d'hydrogène, un atome d'halagéne, un groupe alkyle (substitué), cycloalkyle, aryle, aralkyle ou alkylaryle, ou un cycle contenant un hétéroatome.

2. Catalyseur de polymérisation d'oléfine selon la revendication 1, dans lequel X, dans les composés contenant un groupe sulfonyle de formule (I), peuvent être choisis dans le groupe constitué par C(R₃) (R₄), Si(R₃) (R₄), Sn(R₃) (R₄), Pb(R₃)(R₄), N(R₅), P(R₆), As(R₆), O, S, Se ou Te, où R₃ et R₄ peuvent être identiques ou différents, R₃, R₄, R₅ et R₆ peuvent être choisis dans le groupe constitué par un atome d'hydrogéne, un atome d'halogène, un groupe alkyle (substitué), cycloalkyle, aryle, aralkyle, alkylaryle, alkylalcényle, alcénylalkyle, alkylalcynyle, un cycle contenant un hétéroatome ou un groupe acyle respectivement ; R₃ et R₄ peuvent également représenter un groupe cycloalkyle ou cycloalcényle avec C.

3. Catalyseur de polymérisation d'oléfine selon la revendication 1, dans lequel les composés contenant un groupe sulfonyle sont choisis dans le groupe constitué par un disulfonylalcane, un disulfonylalcène, un hydrocarbure disulfonylique cyclique, un disulfonylsilane, un disulfonylcyclosilane, un disulfonyldihydroxyétain, un disulfonyldihydroxyplomb, et des dérivés contenant un hétéroatome de ceux-ci ; des disulfonylimines, des disulfonylphosphinidènes, des disulfonyle d'arsenic, et des dérivés contenant un hétéroatome de ceux-ci ; un anhydride de sulfoacide (substitué), et des dérivés sulfo et séléno de ceux-ci.

4. Catalyseur de polymérisation d'oléfine selon la revendication 1, dans lequel les composés contenant un groupe sulfonyle sont choisis dans le groupe constitué par
[di(trifluorométhylsulfonyl)méthyl]benzène ;
1,1-di(trifluorométhylsulfonyl)-éthane ;
[chloro-(trifluorométhylsulfonyl)-méthylsulfonyl]-trifluro-méthane ;
[bromo-(trifluorométhylsulfonyl)-méthylsulfonyl]-trifluro-méthane ;
dichloro-di-trifluorométhylsulfonyl-méthane ;
dibromo-di-trifluorométhylsulfonyl-méthane ;
2-[2,2-di-(trifluorométhylsulfonyl)-vinyl]-1H-azole ;
4-[2,2-di-(trifluorométhylsulfonyl) vinyl]-morpholine ;
2-[2,2-di-(trifluorométhylsulfonyl)-vinyl]-1H-indole ;
trifluro-[méthoxyl-(trifluorométhylsulfonyl)-méthylsulfonyl]-méthane ;
1-chloro-1,1-di(trifluorométhylsulfonyl)-éthane;
1-bromo-1,1-di(trifluorométhylsulfonyl)-éthane
4,4-di-(trifluorométhylsulfonyl)-1-butène ;
2,3-di-(trifluorométhylsulfonyl)-1-propanol
1,1-di-(trifluorométhylsulfonyl)-pentane ;
4-bromo-4,4-di-(trifluorométhylsulfonyl)-1-butène ;
3-bromo-5-chloro-1,1-di-(trifluorométhylsulfonyl)-pentane ;
3-bromo-1,1-di-(trifluorométhylsulfonyl)-nonane;
[2,2-di-(trifluorométhylsulfonyl)]-éthyl-benzène ; acide 3-bromo-5,5-di-(trifluorométhylsulfonyl)-pentanoïque ;
1,1-di-(trifluorométhylsulfonyl)-propylène;
2,2-di-(trifluorométhylsulfonyl)-vinylamine ;
[2,2-di-(trifluorométhylsulfonyl)-vinyl]-diméthyl-amine ;
[3,3-di-(trifluorométhylsulfonyl)-allyl]-benzène ;
1-[2,2-di-(trifluorométhylsulfonyl)-vinyl]-naphthalène
4-[2,2-di-(trifluorométhylsulfonyl)-vinyl]-2-éthoxy-phénol ;
1-[2,2-di-(trifluoromëthylsulfonyl)-vinyll-4-nitrobenzène ;
(2,2-di-trifluorométhylsulfonyl-vinyl-benzène ;
7,7-di-(trifluorométhylsulfonyl)-bicyclique[4,1,0]-heptane ;
1-[di-(trifluorométhylsulfonyl)-méthyl]-4-méthyl-benzène ;
di-(trifluorométhylsulfonyl)-cétène ;
1-[di-(trifluorométhylsulfonl)-méthylène]-pyrimidine ;
[di-(trifluorométhylsulfonyl)-méthylène]-triphényl-λ⁵-phosphore ;
1-[di-(trifluorométhylsulfonyl)-méthyl]-4-fluoro-benzène ;
difluoro-di-trifluorométhylsulfonyl-méthane ;
ester éthylique de l'acide 3,2-di-trifluorométhylsulfonyl-cyclopropanecarboxylique ;
trifluoro-(fluoro-trifluorométhylsulfonyl-sulfonylméthyl)-méthane ;
1-(di-trifluorométhylsulfonyl-méthyl)-2,3,4,5,6-pentafluorophényle ;
{4-[2,2-di-(trifluorométhylsulfonyl)-vinyl]-phényl}-diéthyl-amine ;
{4-[4,4-di-(trifluorométhylsulfonyl)-butyl-1,3-diéthyl]-phényl}-diméthyl-amine ;
acide 2-[2,2-di-(trifluorométhylsulfonyl)-éthyl]-malonique ;
butyrate de 2-[2,2-di-(trifluorométhylsulfonyl)-éthyl]-3-oxo-éthyle ;
malonate de 2-[2,2-di-(trifluorométhylsulfonyl)-éthyl] -2 bromo-diéthyle ;
1,1,3,3-tétra-(trifluorométhylsulfonyl)-propane ;
1,1,2,2-tétra-(trifluorométhylsulfonyl)-éthane ;
trifluoro-[méthoxyl-(trifluorométhylsulfonyl)-mésyl]-méthane ;
[di-(trifluorométhylsulfonyl)-mésyl]-trifluoro-méthane ;
di-(trifluorométhylsulfonyl)-vinylcétone ;
malonate de 2,2-di-(trifluorométhylsulfonyl)-éthyle ;
[(diméthyl-λ⁴-sulfa-alcényl)-(trifluorométhylsulfonyl)-mésyl]-trifluoro-méthane ;
1,1-di-éthylsulfa-2,2-di-(trifluorométhylsulfonyl) - éthylène ;
1-[di-(trifluorométhylsulfonyl)-méthyl]-4-iodo-benzène ;
1-[di-(trifluorométhylsulfonyl)-méthyl]-4-fluoro-benzène ;
N-[di-(trifluorométhylsulfonyl)-méthylène]-N'-(4-nitrobenzène)-hydrazine ;
2,2-di-(isopropylamine)-1,1-(trifluorométhylsulfonyl)-éthylène ;
1-(2,2-di-trifluorométhylsulfonyl-cyclopropyl)-cétone ;
1-(2,2-di-trifluorométhylsulfonyl-vinyl)-4-méthyl-benzène ;
ester éthylique de l'acide 3,2-di-trifluorométhylsulfonyl-cyclopropylcarboxylique ;
phosphate de (1-p-tolyl-2,2-di-trifluorométhylsulfonyl-éthyl)-diméthyle ;
1-(di-trifluorométhylsulfonyl-mésyl)-4-chloro-benzéne
(1-méthyl-2,2-di-trifluorométhylsulfonyl-vinyl)-phényl-amine ;
1-(di-trifluorométhylsulfonyl-méthyl)-4-tétra-butyl-2,3,5,6-tétrafluoro-benzène ;
1-(di-trifluorométhylsulfonyl-méthyl)-4-tétra-butyl-2,3,5,6-tétrafluoro-biphényle ;
triméthyl-(pentafluoro-di-trifluorométhylsulfonyl-méthyl)-silane ;
fluoro-tri-trifluorométhylsulfonyl-méthane ;
1-(di-trifluorométhylsulfonyl-méthyl)-2,3,5,6-tétrafluoro-4-hexyloxy-benzène ;
N-phényl-di(trifluorométhylsulfonyl)imine ;
N-2,6-diisopropylphényl-di(trifluorométhylsulfonyl)-imine ;
N-(4-méthoxyphényl)-di(trifluorométhylsulfonyl)imine ;
N-(3-chlorophényl)-di(trifluorométhylsulfonyl)imine ;
N-(2-fluorophényl)-di(trifluorométhylsulfonyl)imine ;
N-isobutyl-di(trifluorométhylsulfonyl)imine ;
N-(2-méthoxyéthyl)-di(trifluorométhylsulfonyl)imine ;
N-éthyl-di(trifluorométhylsulfonyl)imine
N-benzyl-di(trifluorométhylsulfonyl)imine
N-cyclohexyl-di(trifluorométhylsulfonyl)imine ;
N-(2-phénylèthyl)-di(trifluorométhylsulfonyl)imine ;
N-thiényl-di(trifluorométhylsulfonyl)imine ;
N-cyclohexyl-di(trifluorométhylsulfonyl)imine ;
N-(2-phényl)-di(trifluorométhylsulfonyl)imine ;
N-(4-fluorophényl)-di(trifluoromêthylsulfonyl)imine ;
N-(3-méthylphényl)-di(trifluorométhylsulfonyl)imine ;
N-(4-méthylphényl)-di(trifluorométhylsulfonyl)imine ;
N-(4-carboxylphényl)-di(trifluorométhylsulfonyl)imine ;
N-(3-carboxylphényl)-di(trifluorométhylsulfonyl)imine ;
di(trifluorométhylsulfonyl)imine ;
N-fluoro-di(trifluorométhylsulfonyl)imine ;
N-(2-pyridine)-di(trifluorométhylsulfonyl)imine ;
N-(5-chloro-2-pyridyl)-di(trifluorométhylsulfonyl)imine ;
N-triméthylsilyl-di(trifluorométhylsulfonyl)imine ;
N-isopropyl-di(trifluorométhylsulfonyl)imine ;
phosphine-phényl-di(trifluorométhylsulfonyl)-phosphinidène ;
anhydride trifluorométhylsufonique.

5. Catalyseur de polymérisation d'oléfine selon la revendication 1, dans lequel le composé de titane (2) est choisi dans le groupe constitué par un halogénure de titane et un halogénure d'alcool de titane.

6. Catalyseur de polymérisation d'oléfine selon la revendication 1, dans lequel le composé de titane (2) est le tétrachlorure de titane.

7. Catalyseur de polymérisation d'oléfine selon la revendication 1, dans lequel le précurseur de l'halogénure de magnésium actif (1) est choisi dans le groupe constitué par RMgX, MgR₂, MgCl₂•mROH, Mg(OR)₂, XₙMg(OR)₂₋ₙ ou le mélange d'halogénure de magnésium et d'alcool de titane, où m vaut de 1 à 3, 0 < n < 2, X est un atome d'halogène, et R est un groupe hydrocarbonyle en C₁ à C₂₀.

8. Procédé de préparation du catalyseur de polymérisation d'oléfine selon la revendication 1, comprenant les étapes de :
(i) dissolution ou fusion de l'halogénure de magnésium actif (1) formé par un précurseur de chlorure de magnésium dans le dispersant pour obtenir une solution ;
(ii) addition d'un agent tensioactif non ionique à la solution pour émulsifier l'halogénure de magnésium actif ci-dessus dans le milieu émulsifiant liquide organique, et dispersion de l'halogénure de magnésium actif pendant 0,5 à 3 heures sous agitation mécanique de 1000 à 3500 tr/min pour obtenir une émulsion ;
(iii) précipitation de l'halogénure de magnésium actif par addition d'un précipitant à l'émulsion, filtration et séchage pour obtenir des particules solides d'halogénure de magnésium actif ;
(iv) traitement des particules solides d'halogénure de magnésium actif avec de l'alkylaluminium pendant 0,5 à 3 heures à 40 à 80 °C tout d'abord, addition du donneur d'électrons (3) pour obtenir un premier mélange, puis traitement du premier mélange avec la solution organique de composé de titane (2) plusieurs fois pour obtenir un second mélange, et filtration, lavage et séchage du second mélange pour obtenir un catalyseur solide ;
dans lequel le dispersant est un alcane ayant un point d'ébullition inférieur à 150 °C ;
le tensioactif non ionique a une valeur HLB (rapport hydrophile-lipophile) de 0 à 9 ;
le milieu émulsifiant liquide organique est choisi dans le groupe constitué par les hydrocarbures lourds ;
le précipitant est un dérivé du chlorure de silicium répondant à la formule SiClXR₄₋ₓ (dans laquelle 1 ≤ X ≤ 4, R est un hydrocarbure saturé contenant de 1 à 4 atomes de carbone) ;
le solvant organique utilisé dans la solution organique de composé de titane (2) est un hydrocarbure halogène ;
la solution de composé de titane (2) a une concentration de 0,1 à 10 mol/l, et est utilisée pour traiter le support plusieurs fois, dans laquelle au moins une température de traitement est comprise dans la plage allant de -40 à 0 °C, une autre est comprise dans la plage allant de 70 à 100 °C, et le composé de titane représente une quantité totale de 1 à 100 au rapport molaire de Ti/Mg ;
le rapport molaire du donneur d'électrons au Mg est de 0,1 à 2.

9. Procédé de préparation du catalyseur de polymérisation d'oléfine selon la revendication 1, comprenant les étapes de :
(i) addition de particules sphériques d'alcoolate de chlorure de magnésium à la solution de tétrachlorure de titane et réaction pendant 0,1 à 3 heures à une température de -40 à 0 °C ;
(ii) élévation progressive de la température à 40 à 100 °C, addition d'un donneur d'électrons interne et réaction pendant 0,5 à 3 heures ;
(iii) addition du composé de titane (2) à une température de 80 à 140 °C, réaction pendant 0,5 à 3 heures et filtration, et facultativement répétition de l'étape (iii) 1 à 3 fois ;
(iv) lavage et séchage pour obtenir un catalyseur solide sphérique ;
dans lequel l'alcoolate de chlorure de magnésium sphérique et le composé de titane (2) sont mis à réagir plusieurs fois et au moins une température de réaction est comprise dans la plage allant de -40 à 0 °C, une autre est comprise dans la plage allant de 80 à 140 °C, et le composé de titane représente une quantité totale de 1 à 200 au rapport molaire de Ti/Mg ; le donneur d'électrons est le même que celui décrit dans la revendication 8.

10. Catalyseur solide pour catalyser une polymérisation d'oléfine comprenant le catalyseur de polymérisation d'oléfine obtenu par le procédé de la revendication 8 ou de la revendication 9, un cocatalyseur et un donneur d'électrons externe,
dans lequel le cocatalyseur est un composé d' alkylaluminium répondant à la formule AlRₙX₍₃₋ₙ₎, dans laquelle R est un groupe alkyle, aralkyle ou aryle comprenant de 1 à 20 atomes de carbone ; X est un atome d'halogène, et n est un nombre entier de l'ordre de 0 ≤ n ≤ 3 ;
le donneur d'électrons externe est choisi dans le groupe constitué par les composés de siloxane répondant à la formule RₙSi(OR₁)₄₋ₙ dans laquelle R est un groupe alkyle en C₁ à C₁₀, cycloalkyle ou aryle ; R₁ est un groupe alkyle comprenant de 1 à 4 atomes de carbone ; et n est un nombre entier de l'ordre de 0 ≤ n ≤ 3 ;
le rapport molaire de titane dans le catalyseur solide à l'aluminium dans le cocatalyseur est de 1:1 à 1:2000 ;
le rapport molaire du donneur d'électrons externe au catalyseur solide est de 1 à 100 au rapport molaire de Ti/Mg.

11. Catalyseur solide pour catalyser la polymérisation d'oléfine selon la revendication 10, dans lequel le cocatalyseur est le triméthylalurninium, le triéthylaluminium, le triisobutylaluminium, le trioctylaluminium, le diéthylaluminium monohydrogéné, le diisobutylaluminium monohydrogéné, le monochlorure de diéthylaluminium, le chlorure de diisobutylaluminium ou le dichlorure d'éthylaluminium.

12. Catalyseur solide pour catalyser la polymérisation d'oléfine selon la revendication 10, dans lequel le donneur d'électrons externe est le phényltriméthoxysilane, le phényltriéthoxysilane ou le diphényldimêthoxysilane.

13. Procédé de polymérisation d'oléfine, comprenant la polymérisation d'une oléfine en présence du catalyseur solide pour catalyser la polymérisation d'oléfine selon la revendication 10.
